Europäisches Patentamt

European Patent Office

Office européen des brevets

(19)

(11) **EP 1 213 871 A1**

(12) **EUROPEAN PATENT APPLICATION**

(43) Date of publication:
**12.06.2002 Bulletin 2002/24**

(51) Int Cl.⁷: **H04L 5/02**, H04L 5/14

(21) Application number: **00127086.7**

(22) Date of filing: **11.12.2000**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **SIEMENS AKTIENGESELLSCHAFT**<br>**80333 München (DE)** | (72) Inventors:<br>• **Baier, Paul Walter, Prof.**<br>  **67661 Kaiserslautern (DE)**<br>• **Meurer, Michael**<br>  **67663 Kaiserslautern (DE)**<br>• **Sklavos, Alexandros**<br>  **67663 Kaiserslautern (DE)**<br>• **Weber, Tobias**<br>  **67731 Otterbach (DE)** |

(54) **Interference reduction in a radio communications system**

(57)  Method for transmitting signals over an air interface in a radio telecommunication system with a TDD frame structure, wherein the air interface is arranged between at least one access point (AP) of the radio telecommunication system and at least one user terminal (MT), and within traffic channels bursts in a downlink (DL) direction consist only of data symbols without a preamble and/or pilot symbols.

In the specific case of an OFDM system based on TDD (Time Division Duplex), cochannel interference would arise when more than one MTs use the same subcarrier frequency at a specific timeslot.

The basic feature of the proposed air interface is the employment of interference reduction techniques for improving the spectrum efficiency and capacity. It is possible to eliminte the interference among the MTs served by different APs in a service area by jointly processing the received signals and transmitted signals of all APs in a single CU. Joint transmission (JT) can be used in the downlink and the downlink bursts consist only of data symbols offering high data rates.

• **UL, joint detection (JD)**

• **DL, joint transmission (JT)**

Fig. 2. Joint detection and joint transmission

**Description**

A novel scheme developed is dealing with the issue of the coexistence of several communication channels in the same service area of a mobile communications system. Cellular communication networks are a typical example of such a situation, where several Mobile Terminals (MTs) are active and communicating with one or more Access Points (APs). The utilization of the same frequency band by numerous MTs for the purposes of data transmission, inevitably gives rise to the important cochannel interference problem. In the specific case of an OFDM system based on TDD (Time Division Duplex), cochannel interference would arise when more than one MTs use the same subcarrier frequency at a specific timeslot.

The presence of cochannel interference imposes various restrictions on the design of an OFDM system. Such a restriction is, e.g. the assignment of disjoint subcarriers to each MT at each timeslot.

The various solutions that have been given till now to this problem, are briefly summarized in the following points.

- Only one MT should be active in each timeslot, transmitting data symbols over all subcarriers.
- More than one MT could be active simultaneously by assigning disjoint subcarriers to each one.
- Moreover, the combination of OFDM with spreading schemes such as CDMA would allow the coexistence of more than one MT.
- Even when the three above mentioned measures are employed, cochannel interference would be still evident due to the use of same subcarriers by MTs operating in adjacent cell service areas. The problem was dealt with by introducing a reuse factor large enough, thus allowing the reuse of a specific subcarrier in distant cells.

It is clearly evident, in many cases this approach would cause a significant loss in channel capacity as the access to the system's frequency resources would be restricted to many MTs.

The basic feature of the proposed air interface is the employment of interference reduction techniques for improving the spectrum efficiency and capacity. It is possible to eliminate the interference among the MTs served by different APs in a service area by jointly processing the received signals and transmitted signals of all APs in a single CU. In contrast to this, the signals of each AP are processed separately in state of the art access networks. Thus, the MTs served by other APs will cause interference.

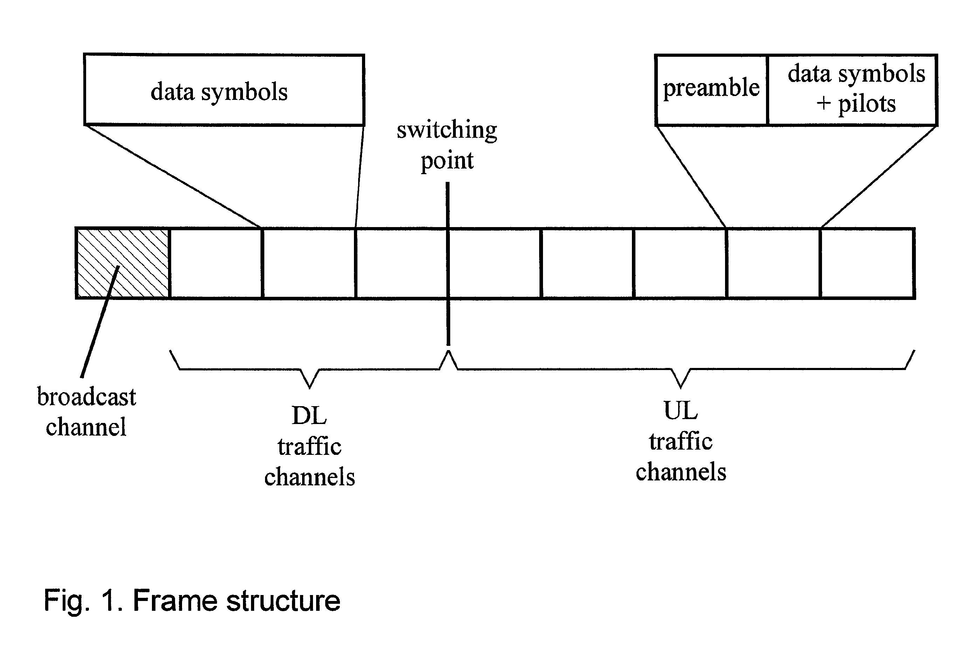

The following discussions are based on a TDMA access network with TDD. Fig. 1 shows an exemplary frame structure. Each frame consists of several downlink (DL) and uplink (UL) timeslots, separated by a variable switching point. Some of the DL timeslots may be used for broadcast channels. The remaining timeslots will be used for traffic channels. The burst structure in the UL will consist of

- a preamble for initial channel estimation,
- data symbols for data transmission and
- optionally some pilot symbols for updating the channel estimates.

Because of the reciprocity theorem, it can be assumed that the radio channels in the DL are the same as in the UL, if the time elapsing between UL and DL timeslots and the velocity of the MTs are sufficiently small. As these conditions will be fulfilled in the environments under discussion, joint transmission (JT) [1] can be used in the DL, and the DL bursts will consist only of data symbols, offering high DL data rates. In the following, only the data transmission will be considered. Channel estimation will be a subject of further research. Joint channel estimation techniques based on Steiner's approach [2] should be considered here.

For the design of state of the art access networks without a CDMA component it is commonly assumed that in each timeslot only the signal of a single MT served by the considered AP plus some noise representing the interference are received. When designing access networks with interference reduction, it becomes necessary to consider the signal structure of the interference to be reduced:

- In the UL the signal received by each AP is the superposition of the transmitted signals of all MTs active in the considered timeslot and service area plus some noise, representing interference from other networks and thermal noise.
- In the DL the received signal of each MT is the superposition of the signals sent by all APs in the considered timeslot and service area plus some noise, representing interference from other networks and thermal noise. In the following an access network based on OFDM will be considered. All MTs and APs in the considered service area shall be synchronized. For illustrating the basic ideas of using joint detection (JD) and joint transmission (JT) techniques for interference elimination it is sufficient to consider a single subcarrier with the frequency $f_0$ and the transmission of a single OFDM symbol, i.e. to consider

- the transmission of $K$ complex valued data symbols $\underline{d}_{f_0}^{(k)}$, $k = 1...K$, from the $K$ MTs to the backbone network via the $K_a$ antennas of the APs and the CU in the UL and

- the transmission of $K$ complex valued data symbols $\underline{d}_{f_0}^{(k)}$, $k = 1...K$, from the backbone network via the CU and the $K_a$ antennas of the APs to the $K$ MTs in the DL.

It is sufficient to consider a single subcarrier of a single OFDM symbol because the signals of different subcarriers or different OFDM symbols are perfectly orthogonal due to the cyclic prefixes. The total number of antennas of the fixed network is $K_a$. This also includes the case that a single AP may be equipped with an array of several antennas, whereas, at the moment, it is assumed for simplicity that each MT has only a single antenna. In the following the equivalent lowpass domain channel impulse response between antenna $k_a$, $k_a = 1...K_a$, and MT $k$, $k = 1...K$, will be denoted by $\underline{h}^{(k, k_a)}(\tau)$. The corresponding transfer function is $\underline{H}^{(k, k_a)}(f)$. As only a single subcarrier with frequency $f_0$ is considered, only $\underline{H}^{(k, k_a)}(f_0)$ is relevant.

### Uplink concept with joint detection (JD)

### Transmission model

The data symbols $\underline{d}_{f_0}^{(k)}$ form the complex amplitudes of the $K$ transmitted sinusoids with frequency $f_0$. The complex amplitudes of the $K_a$ received sinusoids result from the superposition of the transmitted sinusoids weighted by the corresponding transfer functions $\underline{H}^{(k, k_a)}(f_0)$. The complex amplitude $\underline{e}_{f_0}^{(k, k_a)}$ of the part of the received sinusoid at antenna $k_a$ resulting from the transmission of the data symbol $\underline{d}_{f_0}^{(k)}$ may be written as

$$\underline{e}_{f_0}^{(k,k_a)} = \underline{H}^{(k, k_a)}(f_0) \cdot \underline{d}_{f_0}^{(k)}. \tag{0.1}$$

With the noise vector $\underline{\mathbf{n}}_{f_0}$, the data vector

$$\underline{d}_{f_0} = \left( \underline{d}_{f_0}^{(1)} ... \underline{d}_{f_0}^{(K)} \right)^{\mathsf{T}} \tag{0.2}$$

and the channel matrix

$$\underline{\mathbf{H}}_{f_0} = \begin{pmatrix} \underline{H}^{(1,1)}(f_0) & \cdots & \underline{H}^{(K,1)}(f_0) \\ \vdots & & \vdots \\ \underline{H}^{(1,K_a)}(f_0) & \cdots & \underline{H}^{(K,K_a)}(f_0) \end{pmatrix} \tag{0.3}$$

the vector

$$\underline{e}_{f_0} = \left( \underline{e}_{f_0}^{(1)} ... \underline{e}_{f_0}^{(K_a)} \right)^{\mathsf{T}} \tag{0.4}$$

of the complex amplitudes of the sinusoids received at the $K_a$ antennas can be described by the linear model

$$\underline{e}_{f_0} = \underline{\mathbf{H}}_{f_0} \cdot \underline{d}_{f_0} + \underline{n}_{f_0} . \tag{0.5}$$

### Interference elimination by joint detection (JD)

The linear model (0.5) directly leads to the unbiased, i.e. interference free data estimation by a zero forcing equalizer [3]:

$$\hat{\underline{d}}_{f_0} = \left(\underline{H}^{*T}_{f_0} \underline{H}_{f_0}\right)^{-1} \underline{H}^{*T}_{f_0} \underline{e}_{f_0}.$$  (0.6)

This data estimate $\hat{\underline{\mathbf{d}}}_{f_0}$ only exists if the number $K_a$ of antennas is larger or equal than the number $K$ of MTs active in the considered timeslot. Nevertheless the total number of MTs in the service area can be much larger than the number $K_a$ of antennas because only a small part of the MTs will be active in each timeslot. As the number $K$ of MTs active in the considered timeslot is rather low and data detection for the different subcarriers and OFDM symbols can be performed separately without any loss of performance, optimum nonlinear e.g. maximum likelihood estimation techniques may be used instead of the zero forcing equalizer. It may even be possible to combine equalization and forward error correction decoding.

**Dowlink concept with joint transmission (JT)**

**Transmission model**

In contrast to the UL, where the vector of the complex amplitudes of the received sinusoids $\underline{\mathbf{e}}_{f_0}$ is given and an equalizer (0.6) is designed, in the DL the transmit signal has to be designed. With the noise vector $\underline{\mathbf{n}}_{f_0}$ and the vector

$$\underline{s}_{f_0} = \left(\underline{s}^{(1)}_{f_0} ... \underline{s}^{(K_a)}_{f_0}\right)^{T}$$  (0.7)

of the complex amplitudes of the sinusoids transmitted by the $K_a$ antennas the vector

$$\underline{e}_{f_0} = \left(\underline{e}^{(1)}_{f_0} ... \underline{e}^{(K)}_{f_0}\right)^{T}$$  (0.8)

of the complex amplitudes of the sinusoids received at the K MTs active in the considered timeslot can be described by the linear model

$$\underline{e}_{f_0} = \underline{H}^{T}_{f_0} \cdot \underline{s}_{f_0} + \underline{n}_{f_0}.$$  (0.9)

In the following it will be assumed that the receivers in the MTs do not comprise any equalizer, i.e. the vector

$$\hat{\underline{\mathbf{d}}}_{f_0} = \left(\underline{\hat{d}}^{(1)}_{f_0} ... \underline{\hat{d}}^{(K)}_{f_0}\right)^{T}$$  (0.10)

of the data estimates is equal to the vector of the complex amplitudes of the received sinusoids:

$$\hat{\underline{d}}_{f_0} = \underline{e}_{f_0}.$$  (0.11)

**Interference elimination by joint transmission (JT)**

If the number $K_a$ of transmit antennas is larger than the number $K$ of MTs active in the considered timeslot, which will be assumed in the following, there is an infinite number of sets $\underline{\mathbf{s}}_{f_0}$ of complex amplitudes of the transmitted sinusoids which will lead to a perfect data estimate, i.e.

$$\hat{\underline{d}}_{f_0} = \underline{d}_{f_0}.$$  (0.12)

in the noise free case. The transmit signal with the lowest possible energy is given by

$$\underline{s}_{f_0} = \underline{H}_{f_0}^* \left( \underline{H}_{f_0}^T \underline{H}_{f_0}^* \right)^{-1} \underline{d}_{f_0} \ . \tag{0.13}$$

The CU needs perfect knowledge of the radio channels to determine the transmit signal. This knowledge can be obtained from the channel estimator of the UL. If no data is transmitted in the UL from a specific MT, but data should be sent to this MT, it may become necessary that this MT transmits a preamble in the UL for obtaining the required knowledge of the radio channel at the CU.

**Generalized view**

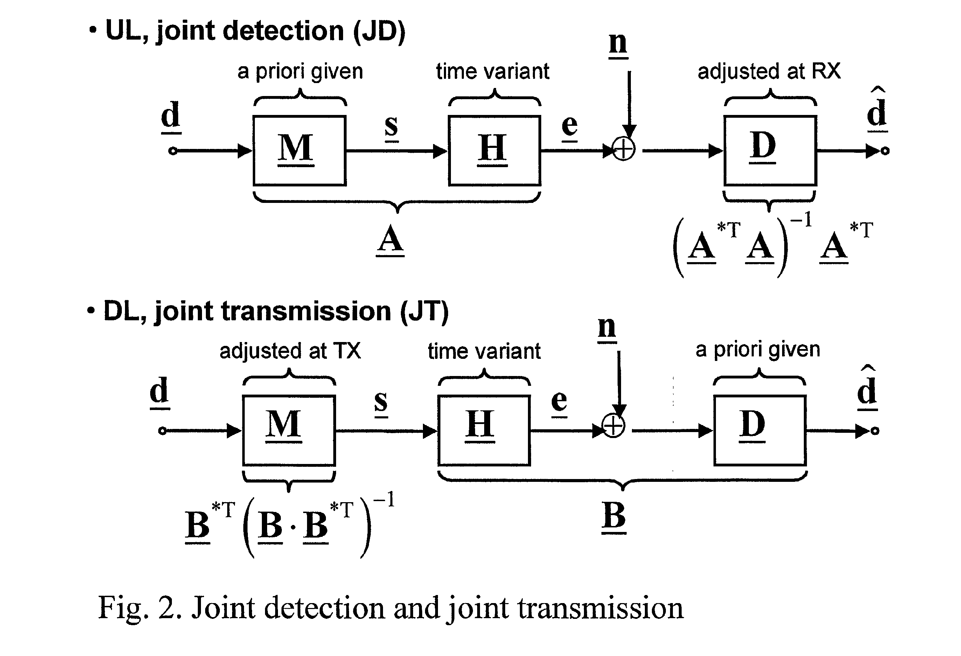

Fig. 2 shows a more general view on JD and JT. Here not only a single subcarrier but the total transmit and receive signals of a single OFDM symbol in the time domain will be considered. As $N$ data symbols per MT are transmitted simultaneously, $N$ subcarriers are used. Because of the cyclic prefix the $N \times N$ channel matrix $\underline{H}^{(k,k_a)}$ from MT $k$ to antenna $k_a$ is a cyclic matrix containing samples of the channel impulse response $\underline{h}^{(k,k_a)}(\tau)$. In the UL the $NK_a \times NK$ total channel matrix is

$$\underline{H} = \begin{pmatrix} \underline{H}^{(1,1)} & \cdots & \underline{H}^{(K,1)} \\ \vdots & & \vdots \\ \underline{H}^{(1,K_a)} & \cdots & \underline{H}^{(K,K_a)} \end{pmatrix} . \tag{0.14}$$

In the UL with JD the $NK \times NK$ blockdiagonal modulator matrix is given and contains $K$ $N \times N$ inverse Fourier matrices:

$$\underline{M} = \begin{pmatrix} \underline{F}^{-1} & & 0 \\ & \ddots & \\ 0 & & \underline{F}^{-1} \end{pmatrix} = \mathbf{I}_K \otimes \underline{F}^{-1} \ . \tag{0.15}$$

With the $NK_a \times NK_a$ blockdiagonal matrix

$$\underline{\tilde{M}} = \mathbf{I}_{K_a} \otimes \underline{F}^{-1} \tag{0.16}$$

and

$$\underline{F}^{-1} = \underline{F}^{*T} \tag{0.17}$$

$$\underline{D} = \left( \underline{M}^{*T} \cdot \underline{H}^{*T} \underline{H} \cdot \underline{M} \right)^{-1} \underline{M}^{*T} \cdot \underline{H}^{*T}$$

$$= \underbrace{(\underline{M}^{-1} \cdot \underline{H}^{*T} \underline{\tilde{M}}}_{\underline{\tilde{H}}^{*T}} \cdot \underbrace{\underline{\tilde{M}}^{-1} \underline{H} \cdot \underline{M})^{-1}}_{\underline{\tilde{H}}} \underbrace{\underline{M}^{-1} \cdot \underline{H}^{*T} \underline{\tilde{M}} \cdot \underline{\tilde{M}}^{-1}}_{\underline{\tilde{H}}^{*T}} \tag{0.18}$$

holds for the $NK \times NK_a$ demodulator matrix $\underline{D}$. The $NK_a \times NK$ matrix $\underline{\tilde{H}}$ consists of $K_a \times K$ blocks, where each block is a

$N \times N$ diagonal matrix with samples of the transfer functions $\underline{H}^{(k_a, k)}(f)$, i.e. equalization may be performed subcarrier wise in the frequency domain.

In the DL the $NK \times NK_a$ total channel matrix is

$$\underline{\mathbf{H}} = \begin{pmatrix} \underline{\mathbf{H}}^{(1,1)} & \cdots & \underline{\mathbf{H}}^{(1,K_a)} \\ \vdots & & \vdots \\ \underline{\mathbf{H}}^{(K,1)} & \cdots & \underline{\mathbf{H}}^{(K,K_a)} \end{pmatrix}. \qquad (0.19)$$

In the DL with JT the $NK \times NK$ blockdiagonal demodulator matrix is given and contains $K$ $N \times N$ Fourier matrices:

$$\underline{\mathbf{D}} = \begin{pmatrix} \underline{\mathbf{F}} & & 0 \\ & \ddots & \\ 0 & & \underline{\mathbf{F}} \end{pmatrix} = \mathbf{I}_K \otimes \underline{\mathbf{F}}. \qquad (0.20)$$

With the $NK_a \times NK_a$ blockdiagonal matrix

$$\underline{\overset{\circ}{\mathbf{D}}} = \mathbf{I}_{K_a} \otimes \underline{\mathbf{F}} \qquad (0.21)$$

$$\underline{\mathbf{M}} = \underline{\mathbf{H}}^{*T} \underline{\mathbf{D}}^{*T} \left( \underline{\mathbf{D}} \cdot \underline{\mathbf{H}} \cdot \underline{\mathbf{H}}^{*T} \underline{\mathbf{D}}^{*T} \right)^{-1}$$

$$= \underbrace{\underline{\overset{\circ}{\mathbf{D}}}^{-1} \underline{\overset{\circ}{\mathbf{D}}} \cdot \underline{\mathbf{H}}^{*T} \underline{\mathbf{D}}^{-1}}_{\underline{\overset{\circ}{\mathbf{H}}}^{*T}} \underbrace{(\underline{\mathbf{D}} \cdot \underline{\mathbf{H}} \cdot \underline{\overset{\circ}{\mathbf{D}}}^{-1}}_{\underline{\overset{\circ}{\mathbf{H}}}} \underbrace{\underline{\overset{\circ}{\mathbf{D}}} \cdot \underline{\mathbf{H}}^{*T} \underline{\mathbf{D}}^{-1})^{-1}}_{\underline{\overset{\circ}{\mathbf{H}}}^{*T}}$$

holds for the $NK_a \times NK$ modulator matrix. The $NK \times NK_a$ matrix $\underline{\overset{\circ}{\mathbf{H}}}$ consists of $K \times K_a$ blocks, where each block is a $N \times N$ diagonal matrix with samples of the transfer functions $\underline{H}^{(k_a, k)}(f)$, i.e. transmit signal construction may be performed subcarrier wise in the frequency domain.

**Packet transmission**

Packet transmission has some implications on physical data transmission over the air interface. The process of assigning timeslots to the data packets to be transmitted is called resource allocation. In the downlink the situation is quite simple because there is the CU which can coordinate resource allocation. The CU will transmit data for several MTs in a single timeslot. The following aspects may be considered, when allocating resources in the DL:

- Only data packets for MTs which are well separated by their channel impulse responses $\underline{h}^{(k,k_a)}(\tau)$ shall be allocated in a single timeslot. This will help to reduce transmit powers.
- Data packets for MTs whose radio channel is not well known at the CU may be transmitted separately together with a preamble, which will allow equalization at the MT.

In the UL it is necessary to jointly detect the signals of all MTs which may send data packets in the considered timeslot to the CU. For a MT which does not actually send a data packet an all zero data packet will be detected at the CU. As the SNR degradation grows with increasing number of jointly detected MTs, it may be useful to assign specific timeslots to each MT. A MT may transmit data packets only in timeslots assigned to this MT. The number of timeslots assigned to each MT may be adopted to the actual traffic. When assigning timeslots to MTs the following aspects may be considered:

- A single timeslot shall only be assigned to MTs which are well separated by their channel impulse responses $\underline{h}^{(k,k_a)}$

($\tau$). This will help to reduce SNR degradation.

- The higher the traffic caused by a MT the more timeslots shall be assigned adaptively to this MT.
- If the total number of MTs in the service area is low more timeslots can be assigned to each MT.

**Literature**

[1] M. Meurer, P.W. Baier, T. Weber, Y. Lu and A. Papatha-nassiou: Joint Transmission, an advantageous downlink concept for CDMA mobile radio systems using time division duplexing, IEE Electronics Letters, vol. 36, pp. 900-901, 2000.

[2] B. Steiner, P.W. Baier: Low cost channel estimation in the uplink receiver of CDMA mobile radio systems, Frequenz, vol. 47, 1993, pp. 292-298.

[3] Klein: Multi-user detection of CDMA-signals - algorithms and their application to cellular mobile radio, Fortschrittberichte VDI, series 10, no. 423, VDI-Verlag, Düsseldorf, 1996.

**Claims**

1. Method for transmitting signals over an air interface in a radio telecommunication system with a TDD frame structure, wherein

   the air interface is arranged between at least one access point (AP) of the radio telecommunication system and at least one user terminal (MT), and
   within traffic channels bursts in a downlink (DL) direction consist only of data symbols without a preamble and/or pilot symbols.

Fig. 1. Frame structure

## • UL, joint detection (JD)

a priori given     time variant     $\underline{\mathbf{n}}$     adjusted at RX

$$\underline{\mathbf{d}} \longrightarrow \boxed{\underline{\mathbf{M}}} \xrightarrow{\underline{\mathbf{s}}} \boxed{\underline{\mathbf{H}}} \xrightarrow{\underline{\mathbf{e}}} \oplus \longrightarrow \boxed{\underline{\mathbf{D}}} \longrightarrow \hat{\underline{\mathbf{d}}}$$

$$\underline{\mathbf{A}}$$

$$\left(\underline{\mathbf{A}}^{*\mathrm{T}}\underline{\mathbf{A}}\right)^{-1}\underline{\mathbf{A}}^{*\mathrm{T}}$$

## • DL, joint transmission (JT)

adjusted at TX     time variant     $\underline{\mathbf{n}}$     a priori given

$$\underline{\mathbf{d}} \longrightarrow \boxed{\underline{\mathbf{M}}} \xrightarrow{\underline{\mathbf{s}}} \boxed{\underline{\mathbf{H}}} \xrightarrow{\underline{\mathbf{e}}} \oplus \longrightarrow \boxed{\underline{\mathbf{D}}} \longrightarrow \hat{\underline{\mathbf{d}}}$$

$$\underline{\mathbf{B}}^{*\mathrm{T}}\left(\underline{\mathbf{B}}\cdot\underline{\mathbf{B}}^{*\mathrm{T}}\right)^{-1}$$

$$\underline{\mathbf{B}}$$

Fig. 2. Joint detection and joint transmission

EP 1 213 871 A1

European Patent
Office

**EUROPEAN SEARCH REPORT**

Application Number

EP 00 12 7086

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PAPATHANASSIOU A ET AL: "A novel multiuser transmission scheme requiring no channel estimation and no equalization at the mobile stations for the downlink of TD-CDMA operating in the TDD mode" PROCEEDINGS OF IEEE 52ND VEHICULAR TECHNOLOGY CONFERENCE, vol. 1, 24 – 28 September 2000, pages 203-210, XP002167900 Piscataway, NJ, USA ISBN: 0-7803-6507-0 * abstract * * page 203, right-hand column, paragraph R * * page 204, left-hand column, paragraph 1 * * page 204, left-hand column, paragraph 3 * * page 210, left-hand column, paragraph 3 * | 1 | H04L5/02 H04L5/14 |
| D,X | MEURER M ET AL: "Joint transmission: advantageous downlink concept for CDMA mobile radio systems using time division duplexing" ELECTRONICS LETTERS, IEE, vol. 36, no. 10, 11 May 2000 (2000-05-11), pages 900-901, XP002167881 UK ISSN: 0013-5194 * the whole document *<br><br>-/-- | 1 | TECHNICAL FIELDS SEARCHED (Int.Cl.7)<br><br>H04L |

The present search report has been drawn up for all claims

| Place of search | Date of completion of the search | Examiner |
|---|---|---|
| THE HAGUE | 30 July 2001 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 00 12 7086

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BAIER P W ET AL: "Joint transmission (JT), an alternative rationale for the downlink of time division CDMA using multi-element transmit antennas" PROCEEDINGS (CAT. NO.00TH8536) OF INTERNATIONAL IEEE SYMPOSIUM ON SPREAD SPECTRUM TECHNIQUES AND APPLICATIONS (6TH ISSSTA), 6 - 8 September 2000, pages 1-5, XP002167882 Piscataway, NJ, USA ISBN: 0-7803-6560-7 * abstract * * page 1, right-hand column, line 6 - line 7 * * page 1, right-hand column, line 21 - line 23 * * page 5, left-hand column, section VI * | 1 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 30 July 2001 | Koukourlis, S |

EPO FORM 1503 03.82 (P04C01)